(19) Europäisches Patentamt

European Patent Office

Office européen des brevets

(11) Veröffentlichungsnummer: **0 660 293 A2**

(12) **EUROPÄISCHE PATENTANMELDUNG**

(21) Anmeldenummer: **94250296.4**

(22) Anmeldetag: **14.12.94**

(51) Int. Cl.6: **G09F 13/18**, F21V 8/00

(30) Priorität: **23.12.93 DE 4344963**
**11.03.94 DE 4409054**

(43) Veröffentlichungstag der Anmeldung:
**28.06.95 Patentblatt 95/26**

(84) Benannte Vertragsstaaten:
**AT BE CH DE DK ES FR GB IT LI NL SE**

(71) Anmelder: **osa- Elektronik GmbH**
**Slabystrasse 9-14**
**D-12459 Berlin (DE)**

(72) Erfinder: **Klick, Michael, Dr. rer. Nat.**
**Mark-Twain-Strasse 21**
**D-12627 Berlin (DE)**
Erfinder: **Mischke, Helge, Dipl.-Ing.**
**Sterndamm 133**
**D-12487 Berlin (DE)**

(74) Vertreter: **Riemann, Bernd**
**Patentanwalt**
**Schönhauser Strasse 108**
**D-13127 Berlin (DE)**

(54) **Leucht- oder Anzeigeeinheit mit einer Lichteinkopplung in einen Lichtleitkörper.**

(57) Aufgabe der Erfindung ist es, bei einer Leucht- oder Anzeigeeinheit der gattungsgemäßen Art über den Dämpfungsverlauf einer lichtführenden Schicht eine gleichmäßige Intensitätsverteilung des über die Fläche nach vorn austretenden Lichtes zu erreichen und daraus resultierend neue Anordnungen der lichtführenden Schicht sowie neue Anwendungen aufzuzeigen.

Diese Aufgabe wird im wesentlichen dadurch gelöst, daß eine Fläche mindestens eines Lichtleitkörpers durch die zufällige Anordnung von geometrischen Figuren als eine diffus reflektierende Fläche ausgebildet ist, wobei der Erwartungswert des Verhältnisses zwischen reflektierender Fläche zur Gesamtfläche eines kleinen ausgewählten Bereiches dem Dämpfungsverlauf bzw. näherungsweise dem Dämpfungsverlauf für konstante Lichtabstrahlung entspricht und der kontinuierliche Dämpfungsverlauf durch einen diskontinuierlichen Verlauf angenähert ist und daß bei einer Anzeigeeinheit das Anzeigesymbol in bekannter Weise angeordnet ist.

Fig. 2

EP 0 660 293 A2

Die Erfindung bezieht sich auf eine Leucht- oder Anzeigeeinheit mit einer Lichteinkopplung über mindestens ein auf einer Leiterplatte angeordnetes SMD-LED-Leuchtelement, wobei der Leiterplattenstreifen in vorgesehene Ausnehmungen in einen Lichtleitkörper fixiert ist und der Lichtleitkörper auf einer Fläche Reflexionspunkte aufweist. Die Erfindung ist sowohl bei kleinflächigen, besonders aber bei großflächigen Leucht- oder Anzeigeeinheiten anwendbar.

Es sind beleuchtete Namens- oder Hinweisschilder bekannt, bei denen ein oder mehrere LED-Chips auf einem Leiterplattenstreifen in einem flachen, transparenten Kunststoffkörper integriert angeordnet sind. Der Kunststoffkörper ist hierbei mit gezielt eingebrachten Störungen versehen und von einem ein Gehäuse bildenden Rahmen umgeben. Die verwendeten LED-Chips sind vorzugsweise für eine SMD-Montage geeignet. Der eingesetzte flache Kunststoffkörper dient hierbei als Lichtleiter. Die gezielt in diesen Kunststoffkörper eingebrachten Störungen bewirken eine Reflexion der ausgesendeten Lichtstrahlen.

Die bisher durchgeführten Maßnahmen auf dem Gebiet der Ausbildung und Gestaltung diffuser Reflexionsflächen beruhen hauptsächlich auf empirisch ermittelten Werten. Sie haben noch eine unbefriedigende Intensitätsverteilung des austretenden Lichtes zur Folge. Der verstärkte Einsatz derartiger Anzeigeelemente erfordert sowohl bei kleinflächigen als auch bei großflächigen Leucht- oder Anzeigeeinheiten eine Weiterentwicklung derselben.

Zweck der vorliegenden Erfindung ist es, Mittel und Wege aufzuzeigen, wodurch bei den Anzeigeelementen die Einstrahlungsverluste weiter reduziert werden können und auch eine gleichmäßige Intensitätsverteilung des austretenden Lichtes erreicht wird und damit diese Anzeigeelemente eine Gebrauchswertsteigerung erfahren. Über diesen Weg sind dann weitere neue Anwendungsmöglichkeiten zu erschließen.

Der Erfindung liegt die Aufgabe zugrunde, über den Dämpfungsverlauf der aus der senkrechten Abstrahlung resultierenden Dämpfung des in den Lichtleitkörper geführten Lichtstrahlbündels eine gleichmäßige Intensitätsverteilung des über die Fläche nach vorn austretenden Lichtes zu erreichen und daraus ableitend neue Anordnungen der lichtführenden Schicht aufzuzeigen.

Erfindungsgemäß wird die Aufgabe bei einer Leucht- oder Anzeigeeinheit der gattungsgemäßen Art dadurch gelöst, daß eine Fläche mindestens eines Lichtleitkörpers durch die zufällige Anordnung von geometrischen Figuren als eine diffus reflektierende Fläche ausgebildet ist, wobei der Erwartungswert des Verhältnisses zwischen reflektierender Fläche zur Gesamtfläche eines kleinen ausgewählten Bereiches dem Dämpfungsverlauf bzw. näherungsweise dem Dämpfungsverlauf für konstante Lichtabstrahlung entspricht und der kontinuierliche Dämpfungsverlauf durch einen diskontinuierlichen Verlauf angenähert ist und daß bei einer Anzeigeeinheit das Anzeigesymbol in bekannter Weise angeordnet ist.

Mit dieser Maßnahme wird eine diffus reflektierende Schicht ausgebildet, die sich durch eine gezielte reproduzierbare Einstellung des Dämpfungsverlaufes einer lichtführenden Schicht für eine gleichmäßige Intensitätsverteilung des nach vor austretenden Lichtes über die gesamte Fläche auszeichnet.

Über die Verteilungsfunktion einer Zufallsgröße erfolgt eine gezielte Verteilung der Koordinaten der zu setzenden, die Reflexionsfläche bildenden, geometrischen Figuren. Unter Zuhilfenahme der Wahrscheinlichkeitsrechnung werden somit die erforderlichen Koordinaten ermittelt. Die Wahrscheinlichkeitsdichte in Richtung der Lichtausbreitung ist proportional zum berechneten Dämpfungsverlauf. Bei rechteckigen Anzeigeelementen sind senkrecht zur Lichtausbreitung die die Reflexionsflächen bildenden geometrischen Figuren gleich verteilt. Die Dämpfung des Lichtes wird durch die Dämpfungskonstante $\delta$ bestimmt, die umgekehrt proportional dem räumlichen Abstand ist. Diese Dämpfungskonstante hängt von der Reflexionsrate - gemeint ist der räumliche Abstand zwischen zwei Reflexionen eines Lichtstrahls - und der Verlustrate bei der Reflexion ab. Die Verlustrate bei der Reflexion ist im wesentlichen durch das eingesetzte Material bedingt.

Die Realisierung der Aufgabenstellung erfolgt durch eine gezielte Beeinflussung des Dämpfungsverlaufs der Eigenschaften der diffus reflektierenden Grenzschicht. Dabei sind die Eigenschaften der diffus reflektierenden Grenzschicht durch folgende Maßnahmen beeinflußbar:

* Kontinuierliche Veränderung der Oberflächenstruktur,
    beispielsweise durch Aufbringen von Schichten, wie Folien, Lacke und dgl. oder durch Verändern der lichtführenden Schicht z.B. durch mechanische Bearbeitung oder Ätzen. Diese Variante realisiert im Gegensatz zu dem oben aufgeführten Beispiel eine kontinuierliche Veränderung der Rauhigkeit.

Die Rauhigkeit erzeugt schließlich ein diffuses Reflexionsvermögen.

* Veränderung der Oberflächenbedeckung bei konstanter Rauhigkeit der bedeckten Oberfläche,
    beispielsweise durch Veränderung eines Bitmapverlaufes, wie im oben aufgeführten Beispiel dargestellt.

Selbstverständlich ist auch eine Kombination beider Maßnahmen möglich.

Der Dämpfungsverlauf wird wie folgt eingestellt:

2

1. Über das Flächenverhältnis von diffusem Reflexionsgebiet zu Flächen der Totalreflexion, wobei das Verhältnis ortsabhängig ist.

2. Über das Verhältnis von Flächen mit unterschiedlichem Reflexionsvermögen - wobei Gebiete mit Totalreflexion vorhanden sein können.

3. Über den Gradienten der diffusen Reflexion, dabei ist die Form der Gebiete unerheblich.

Die zufällige Verteilung der geometrischen Figuren entsprechend dem Dämpfungsverlauf bewirkt, daß ein Betrachter, der vor dem beleuchteten Anzeigeelement steht, einzelne Gebiete und geometrische Figuren nicht mehr mit bloßem Auge wahrnehmen kann. Damit wird die angestrebte Gebrauchswertsteigerung, insbesondere für großflächige beleuchtete Anzeigeelemente realisiert. Die diffus ausgebildeten Reflexionsflächen einer lichtführenden Schicht ermöglichen grundsätzlich eine Erweiterung des Einsatzgebietes der mit einer Lichteinkopplung versehenen Anzeigeeinheiten. Nunmehr ist es auch möglich, großflächige Einheiten herzustellen, die beispielsweise als Leuchteinheiten für indirekte Beleuchtung zum Einsatz kommen. Weiterhin ist es denkbar, solche Einheiten gezielt als Nacht- oder Notbeleuchtung für ausgewählte Anwendungsfälle einzusetzen.

Die so ausgebildeten Leucht- oder Anzeigeeinheiten können auch als Namensschild bzw. als Straßen- und Verkehrsschild oder als Informationstafel eingesetzt werden. Dabei besteht ein wesentlicher Vorteil dieser Anzeigeeinheiten auch darin, daß sie ein blendfreies Licht aussenden.

Zur weiteren Verbesserung einer gleichmäßigen Lichtabstrahlung ist auf der Fläche des Lichtaustrittes des Lichtleitkörpers eine lichtstreuende Folie angeordnet.

Ein weiteres Merkmal besteht auch darin, daß die Leucht- oder Anzeigeeinheit einen mehrschichtigen Aufbau aufweist. Das heißt, daß mehrere Lichtleitkörper übereinander angeordnet sind. Dabei sind zwischen den einzelnen Lichtleitkörpern Abstandshalter angeordnet.

So ist es beispielsweise möglich, daß mehrere unterschiedlich ausgebildete diffus reflektierende Flächen übereinander angeordnet sind.

Ein zu beleuchtendes Zeichen, welches z.B. aus zwei oder mehr zu beleuchtenden Symbolen besteht, kann auf diese Art und Weise vorteilhaft dargestellt werden.

Die Erfindung sieht auch vor, daß mehrere gleichartig ausgebildete diffus reflektierende Flächen übereinander angeordnet sind.

Es ist auch möglich, daß übereinander angeordnete diffus reflektierende Flächen aus einer Kombination gleichartiger und unterschiedlich ausgebildeter Flächen bestehen.

Die gleichartige bzw. unterschiedliche Ausbildung der Flächen bezieht sich auf die vorgenommenen Veränderungen an der reflektierenden Grenzschicht der Oberflächenstruktur einerseits und andererseits an den vorgenommenen Veränderungen der Oberflächenbedeckung. Letztere Maßnahme ist beispielsweise über eine Veränderung der Reflexionspunktdichte erreichbar.

Schließlich besteht eine weitere Möglichkeit der Erfindung darin, daß bei mehreren übereinander angeordneten diffus reflektierenden Flächen die Lichteinkopplung mit einem unterschiedlichen Farbspektrum erfolgt. Bei Verwendung farbiger LED-Chips erscheint die von den Chips angestrahlte Fläche als eine farbige Leuchtfläche. Weiterhin bieten die eingesetzten SMD-LED die Möglichkeit einer elektronischen Ansteuerung. So ist es möglich, in Gefahrensituationen ein Blinklicht in verschiedenen Farben, anwendbar z.B. bei Störungen, zu erzeugen. Die eingesetzten Leucht- oder Anzeigeeinheiten weisen gegenüber konventionell beleuchteten Schildern eine Energieeinsparung auf, wodurch ihr Einsatz wirtschaftlicher gestaltet werden kann. Als ein weiterer positiver Effekt ist das ausgesandte blendfreie Licht zu nennen.

Die mit der Erfindung besonders bei großflächig ausgebildeten Leucht- oder Anzeigeeinheiten erzielten Vorteile bieten sich geradezu an, völlig neue Anwendungsgebiete zu erschließen.

Neben dem Einsatz als Straßen- und Verkehrsschilder eignet sich diese Lösung auch für großflächige Werbeanzeigen. Weiterhin ist ein Einsatz als Informationstafel angezeigt. Durch den Einsatz von LED für die Lichteinkopplung ergibt sich auch gegenüber konventionell beleuchteten Schildern neben der bereits erwähnten Energieeinsparung vor allem ein geringerer Wartungsaufwand. Darüber hinaus wird die Sicherheit und Zuverlässigkeit beim Einsatz derartiger Leucht- oder Anzeigeeinheiten erhöht. Auch auf dem Gebiet der Leuchteinheiten selbst bieten sich durch die Erfindung neue Lösungsmöglichkeiten an. Das bei der Lichteinkopplung erzeugte blendfreie Licht empfindet der Betrachter als angenehm. Damit ergeben sich neue Anwendungsmöglichkeiten, z.B. auch für die Erzeugung von Lichteffekten in Diskotheken. Auch ein Einsatz derartiger Leuchteinheiten für eine indirekte Beleuchtung repräsentativer Gebäude ist möglich.

Ferner kann auch bei kleineren Schildern durch die Anschrägung einer Seitenkante eine zusätzliche Reflexionsfläche geschaffen werden, wodurch eine Senkung der Einstrahlungsverluste erreicht wird. Vorteilhafterweise ist die Anschrägung durch die Aneinanderreihung von Bereichen mit unterschiedlichem Steigungswinkel charakterisiert.

Die Anschrägung kann in einer weiteren Ausgestaltung auch zumindest teilweise einen bogenförmigen Verlauf aufweisen. Die Anschrägung selbst ist durch die Größe des die Anschrägung einschließenden Winkels ($\gamma$) und die Länge der die Anschrägung bildenden Strecke (a) definiert.

Ein entscheidendes Kriterium für die Leistungsdichteverteilung in der lichtführenden Glasschicht ist die Häufigkeit von Reflexionen an der Grenzfläche Glas-Luft. An der Grenzfläche werden nur Strahlen reflektiert,die mit einem Winkel auf die Grenzfläche auftreffen, der kleiner als der Grenzwinkel für die Totalreflexion $\beta_G$ ist. Der Grenzwinkel für die Totalreflexion hängt von den Brechungsindizies von Luft und dem des eingesetzten Werkstoffes für den Lichtleitkörper ab.

Die Erfindung soll nachstehend anhand der Zeichnung im Prinzip beispielshalber noch näher erläutert werden. In der zugehörigen Zeichnung zeigen:

Fig.1    eine einseitige Lichteinstrahlung ohne Reflexion an der gegenüberliegenden Kante;
Fig.2    eine Realisierungsmöglichkeit der diffus reflektierenden Schicht nach Fig.1 ;
Fig.3    eine einseitige Lichteinstrahlung mit Reflexion an der gegenüberliegenden Kante;
Fig.4    eine Realisierungsmöglichkeit der diffus reflektierenden Schicht nach Fig. 3;
Fig.5    eine zweiseitige Lichteinstrahlung ohne Reflexion an der jeweils gegenüberliegenden Kante;
Fig.6    eine Realisierungsmöglickeit der diffus reflektierenden Schicht nach Fig.5 ;
Fig.7    die Anwendung auf eine runde Scheibe mit äußerer (axialsymmetrischer) Einstrahlung;
Fig.8    eine dazugehörige Realisierungsmöglichkeit der diffus reflektierenden Schicht nach Fig.7;
Fig.9    eine schematische Darstellung eines mehrschichtigen Aufbaues einer Leucht- oder Anzeigeeinheit;
Fig.10   eine modifizierte Form der Anschrägung der Seitenkanten;
Fig.11   eine weitere mögliche Ausgestaltung der Anschrägung der Seitenkanten des Lichtleitkörpers.

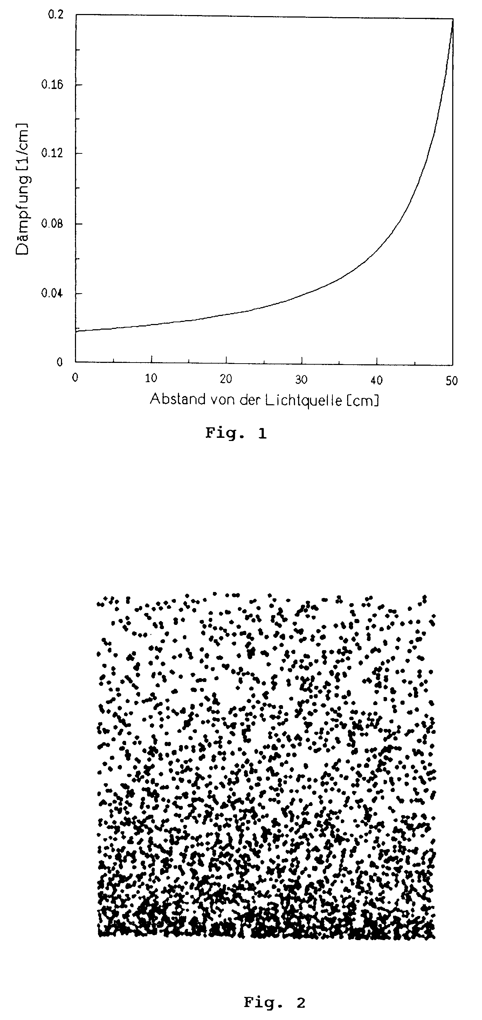

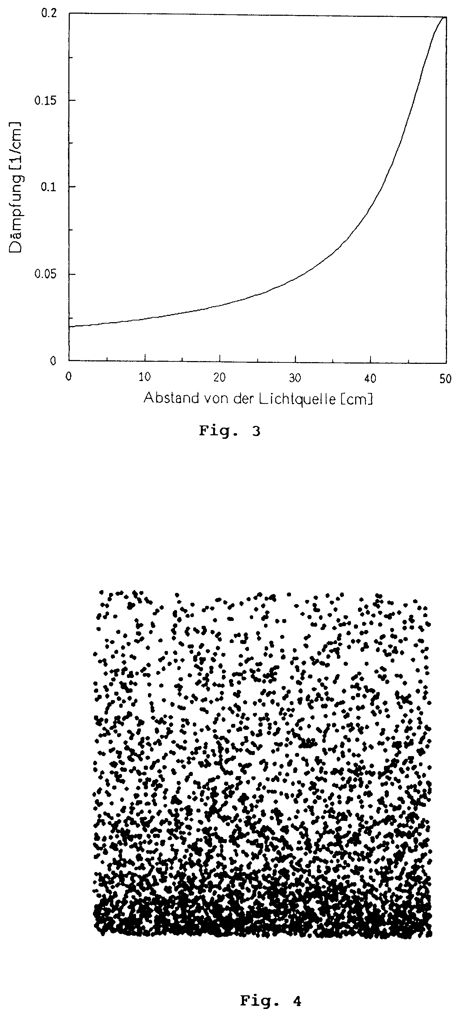

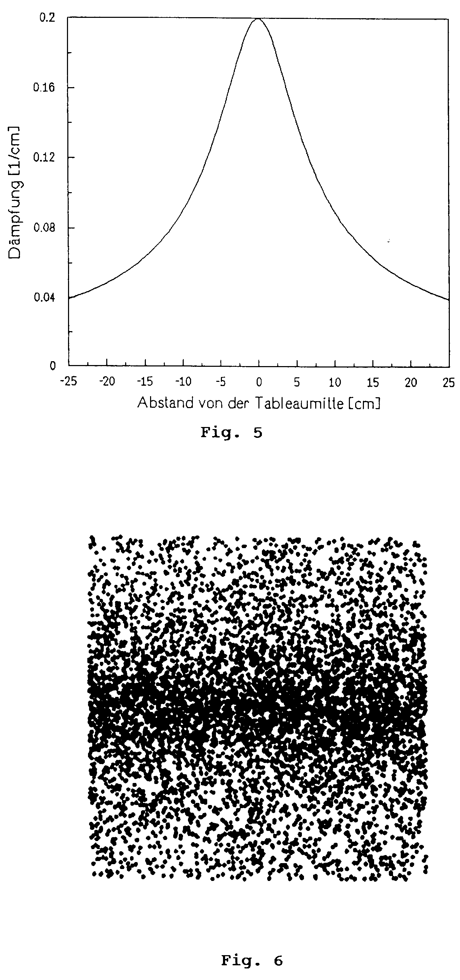

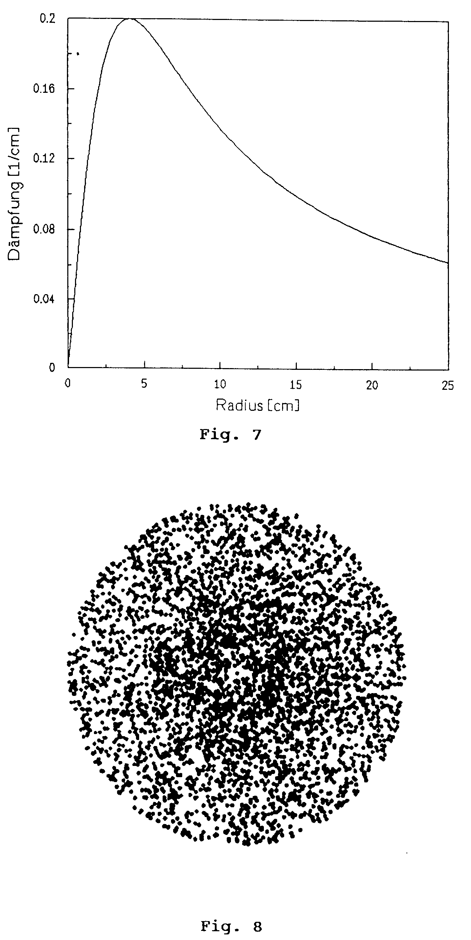

Fig.1 veranschaulicht den Dämpfungsverlauf, so wie er für eine konstante Abstrahlung einzustellen ist. Mit zunehmender Entfernung wird die Dämpfung des in der Schicht geführten Lichtes größer. Der Abfall der Lichtstromdichte wird über eine stärkere Reflexion kompensiert. Zu den Fig. 3, 5, und 7 gilt diese Aussage in analoger Weise.

In Fig.2 ist eine mögliche Realisierung über die zufällige Verteilung von Reflexionsflächen bildenden geometrischen Figuren dargestellt. In dieser Anordnung ist die Wahrscheinlichkeitsdichte in Richtung der Lichtausbreitung proportional zum berechneten Dämpfungsverlauf.

Für die Fig.4, 6 und 8 gilt diese Aussage in analoger Weise.

Die Dämpfung $\delta$ ist im eindimensionalen Fall definiert durch folgende Beziehung

$$\delta \;=\; \frac{dJ}{dx}\frac{1}{J} \quad . \tag{1}$$

Hierbei stellt J die Leistungsstromdichte des Lichtes (ortsabhängige Intensitätsgröße ) dar. Im allgemeinen Fall ist die Ableitung nach x durch den entsprechenden Vektoroperator zu ersetzen. Die Intensität des abgestrahlten Lichtes ist $\delta J$. Eine gleichmäßige Ausleuchtung kann somit nur über ein konstantes Produkt $\delta J$ realisiert werden.

Die allgemeine Differentialgleichung der gleichmäßigen Ausleuchtung kann mathematisch in der Form

$$\text{grad div } \boldsymbol{J} \;=\; \nabla(\nabla \bullet \boldsymbol{J}) \;=\; -\nabla(\delta|\boldsymbol{J}|) \;=\; 0 \qquad (2)$$

gefaßt werden.
Die Randbedingung an der Stelle $y = 0$

$$\delta(0) \;=\; \delta_0 \qquad (3)$$

legt die Dämpfung an der der Lichteinkopplung gegenüberliegenden Seite fest.
In eindimensionaler Form wird aus der allgemeinen Bedingung

$$\frac{d^2J}{dy^2} \;=\; \frac{d(\delta J)}{dy} \;=\; 0 \quad . \tag{4}$$

Es folgt für den Dämpfungsverlauf ohne Reflexion die Darstellung

$$\delta = \frac{\delta_0}{1 + \delta_0 y} \quad . \tag{5}$$

Für einseitige Einstrahlung mit Reflexion an der gegenüberliegenden Kante ($y$ = 0) und zweiseitige Einstrahlung ($y$ = 0 in der Mitte) gilt die Differentialgleichung

$$\frac{d}{dy}\left[\delta(J_a + J_b)\right] = 0 \tag{6}$$

mit der Lösung für den Dämpfungsverlauf $\delta(y)$

$$\delta = \frac{\delta_0}{\sqrt{1 + (\delta_0 y)^2}} \quad , \tag{7}$$

Für eine runde Scheibe gewinnt man für J die Differentialgleichung

$$\frac{d}{dr}\left(\frac{1}{r}\frac{d(rJ)}{dr}\right) = 0 \tag{8}$$

Die Dämpfung $\delta$ hat für eine runde Scheibe ein Maximum an der Stelle (Randbedingung). $\delta_2$ gibt die Dämpfung an der Stelle $r_2$ vor, $\delta(r_2) = \delta_2$; $\delta(0) = 0$ für endliches J(0).

$$r_m = r_2\sqrt{\frac{2}{r_2\delta_2} - 1} \quad ; \quad \delta(r_m) = \delta_m = \frac{1}{r_m} \quad . \tag{9}$$

Aus praktischen Erwägungen sollte $r_2 = r_m$ gewählt werden. Für diesen Zweck, aber ohne Beschränkung der Allgemeinheit, wird $\delta$ in der Form

$$\frac{\delta}{\delta_m} = \frac{2r/r_m}{(r/r_m)^2 + 1} \tag{10}$$

geschrieben.

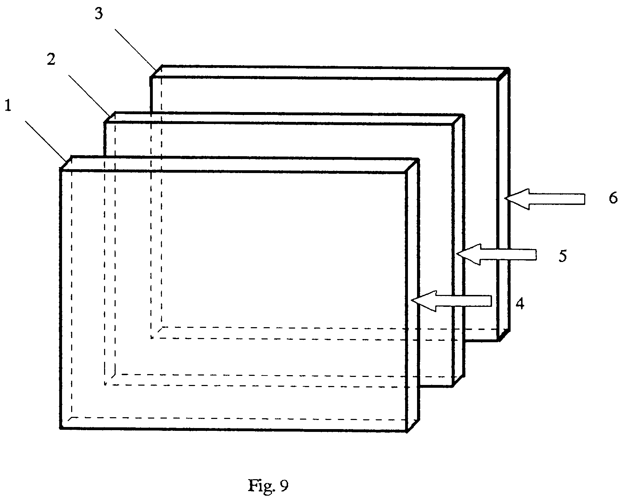

Die Erfindung bietet auch die Möglichkeit der mehrschichtigen Anordnung diffus ausgebildeter Flächen übereinander. In Fig. 9 ist eine derartige Anordnung schematisch dargestellt. Die diffus ausgebildeten Flächen der Lichtleitkörper 1, 2 und 3 sind übereinander angeordnet, wobei zwischen den einzelnen Lichtleitkörpern 1, 2, 3 zweckmäßigerweise Abstandshalter angeordnet sind. Über eine seitliche Lichteinkopplung wird dem Lichtleitkörper 1 ein Farbspektrum 4, erzeugt von einer entsprechenden LED, zugeführt. In den Lichtleitkörper 2 wird über eine Lichteinkopplung ein Farbspektrum 5 zugeführt. Schließlich wird dem Lichtleitkörper 3 über die Lichteinkopplung ein Farbspektrum 6 zugeführt.

Wie bereits angedeutet, kann die Lichteinkopplung auch mit einer elektronischen Ansteuerung versehen sein, wodurch sich originelle Lichteffekte realisieren lassen.

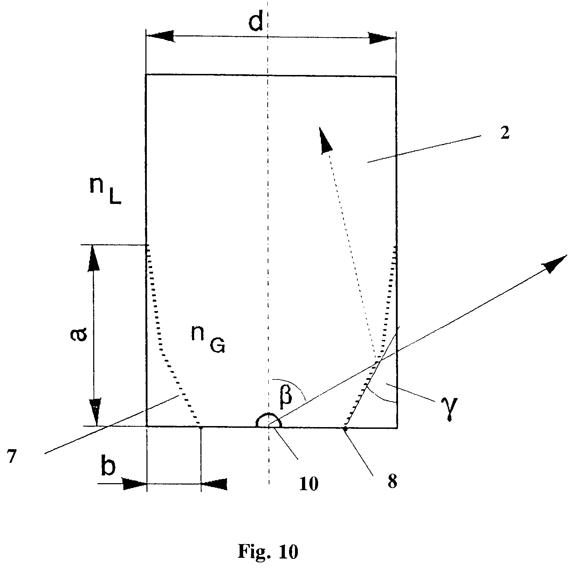

Die Fig.10 veranschaulicht einen Schnitt durch einen Lichtleitkörper 2 mit seitlicher Lichteinkopplung. Die Lichteinkopplung erfolgt hierbei über ein als SMD-LED ausgebildetes Leuchtelement 10. Der Lichtleitkörper 2, der eine Dicke d aufweist, ist im Bereich der Lichteinkopplung mit einer einen unterschiedlichen Anstiegswinkel aufweisenden Anschrägung 7 versehen. Im Bereich der Lichteinkopplung, daß heißt, in unmittelbarer Nähe des Leuchtelementes 10, ist der Anstiegswinkel größer, als in dem Bereich der weiter vom Leuchtelement 10 entfernt ist.

Der Abstand b, der ein Maß für die Anschrägung 7 darstellt, wird durch den Winkel $\gamma$ und die Länge der Strecke a bestimmt. Der Grenzwinkel für die Totalreflexion $\beta_G$ hängt von den Brechungsindizies von Luft ($n_L$ = 1) und dem des Glases (für Plexiglas bzw. PMMA $n_G$ = 1,5) ab. Sofern bei der Lichteinkopplung als Lichtleiter Plexiglas (PMMA) eingesetzt ist, ergibt sich die Länge der Strecke a aus der folgenden Beziehung

$$a = \frac{d}{2} \cot\beta_G = 0{,}58d$$

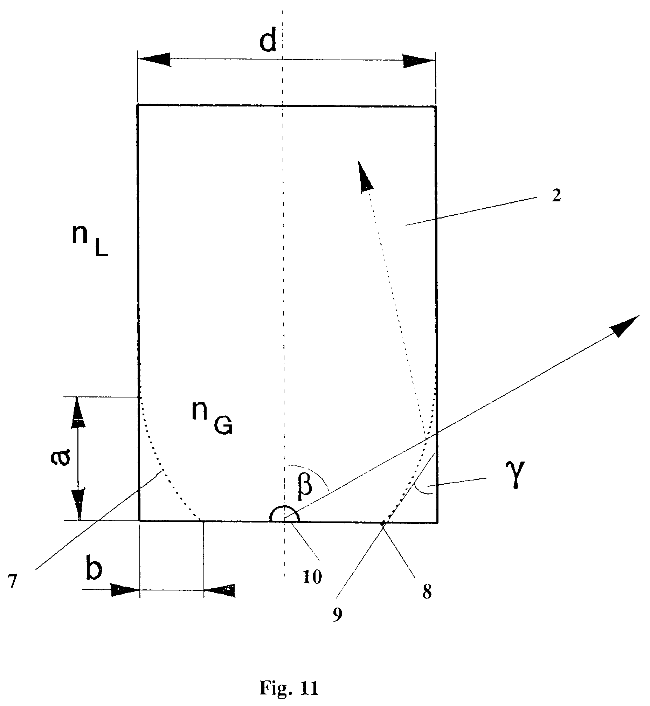

Fig.11 zeigt eine weitere mögliche Ausgestaltung der Anschrägung 7. Hierbei ist die Anschrägung 7 bogenförmig ausgebildet. Eine im Punkt 8 angelegte Tangente 9 verdeutlicht den unterschiedlichen Anstiegswinkel der Anschrägung 7. Die Bedingung

$$\gamma \geqq 90° - \beta_G$$

muß für den Punkt 8 erfüllt sein.

Bei der Realisierung der Anschrägung 7 ist es durchaus möglich, sowohl das Maß a als auch das Maß b aus fertigungstechnischen Gründen etwas größer zu wählen.

## Patentansprüche

1. Leucht- oder Anzeigeeinheit mit einer Lichteinkopplung über mindestens ein auf einer Leiterplatte angeordnetes SMD-LED-Leuchtelement in einen Lichtleitkörper, der auf einer Fläche Reflexionspunkte aufweist, **dadurch gekennzeichnet**, daß eine Fläche mindestens eines Lichtleitkörpers durch die zufällige Anordnung von geometrischen Figuren als eine diffus reflektierende Fläche ausgebildet ist, wobei der Erwartungswert des Verhältnisses zwischen reflektierender Fläche zur Gesamtfläche eines kleinen ausgewählten Bereiches dem Dämpfungsverlauf bzw. näherungsweise dem Dämpfungsverlauf für konstante Lichtabstrahlung entspricht und der kontinuierliche Dämpfungsverlauf durch einen diskontinuierlichen Verlauf angenähert ist und daß bei einer Anzeigeeinheit das Anzeigesymbol in bekannter Weise angeordnet ist.

2. Leucht- oder Anzeigeeinheit nach Anspruch 1, dadurch gekennzeichnet, daß über die Verteilungsfunktion einer Zufallsgröße eine gezielte Verteilung der Koordinaten der zu setzenden, die Reflexionsfläche bildenden, geometrischen Figuren erfolgt.

3. Leucht- oder Anzeigeeinheit nach Anspruch 1 und 2, dadurch gekennzeichnet, daß eine vollständig bedeckende Reflexionsfläche einen kontinuierlichen Dämpfungsverlauf aufweist und diese durch eine ortsabhängige Veränderung der Oberflächenstruktur charakterisiert ist.

4. Leucht- oder Anzeigeeinheit nach einem oder mehreren der Ansprüche 1 bis 3, dadurch gekennzeichnet, daß eine ortsabhängige Veränderung der Oberflächenstruktur durch eine Veränderung der Rauhigkeit bewirkt ist.

5. Leucht- oder Anzeigeeinheit nach einem oder mehreren der Ansprüche 1 bis 4, dadurch gekennzeichnet, daß eine ortsabhängige Veränderung der Oberflächenstruktur durch das gezielte Aufbringen feiner regelmäßiger lichtstreuender Strukturen bewirkt ist.

6. Leucht- oder Anzeigeeinheit nach einem oder mehreren der Ansprüche 1 bis 5, dadurch gekennzeichnet, daß die einzelnen geometrischen Figuren durch eine ortsabhängige Veränderung der Oberflächenstruktur und durch Veränderung der Oberflächenbedeckung der Gesamtfläche mit diesen Figuren gebildet sind.

7. Leucht- oder Anzeigeeinheit nach einem oder mehreren der Ansprüche 1 bis 6, dadurch gekennzeichnet, daß mehrere unterschiedlich ausgebildete diffus reflektierende Flächen übereinander angeordnet sind.

8. Leucht- oder Anzeigeeinheit nach einem oder mehreren der Ansprüche 1 bis 7, dadurch gekennzeichnet, daß mehrere gleichartig ausgebildete diffus reflektierende Flächen übereinander angeordnet sind.

9. Leucht- oder Anzeigeeinheit nach einem oder mehreren der Ansprüche 1 bis 8, dadurch gekennzeichnet, daß die übereinander angeordneten diffus reflektierenden Flächen aus einer Kombination gleichartiger und unterschiedlich ausgebildeter Flächen bestehen.

10. Leucht- oder Anzeigeeinheit nach einem oder mehreren der Ansprüche 1 bis 9, dadurch gekennzeichnet, daß bei mehreren übereinander angeordneten diffus reflektierenden Flächen die Lichteinkopplung mit unterschiedlichen Farben erfolgt.

11. Leucht-oder Anzeigeeinheit nach Anspruch 1, dadurch gekennzeichnet, daß der unterschiedliche Lichtbrechungswinkel für die Erzeugung einer diffus reflektierenden Fläche durch eine bekannte Anschrägung mindestens einer Seitenkante gebildet ist, wobei die Anschrägung durch Aneinanderreihen von Bereichen unterschiedlicher Steigungswinkel charakterisiert ist.

12. Leucht- oder Anzeigeeinheit nach Anspruch 11, dadurch gekennzeichnet, daß die Anschrägung zumindest teilweise einen bogenförmigen Verlauf aufweist.

13. Leucht- oder Anzeigeeinheit nach Anspruch 11 und 12, dadurch gekennzeichnet, daß die Anschrägung durch die Größe des die Anschrägung einschließenden Winkels ($\gamma$) und die Länge der die Anschrägung bildenden Strecke (a) definiert ist.

Fig. 1

Fig. 2

Fig. 3

Fig. 4

Fig. 5

Fig. 6

Fig. 7

Fig. 8

Fig. 9

Fig. 10

Fig. 11